# FASCICULE DE BREVET EUROPEEN

(11) **EP 3 162 027 B1**
(45) Date de publication et mention de la délivrance du brevet: **14.08.2019**
(21) Numéro de dépôt: 15756956.7
(22) Date de dépôt: 26.06.2015
(51) Int. Cl.: H04L 29/06, H04L 29/14, H04L 12/26, H04L 12/24

(54) **PROCEDE DE COMMUNICATION TCP VIA DES CHEMINS MULTIPLES ENTRE DEUX TERMINAUX**
MEHRWEG-TCP-KOMMUNIKATIONSVERFAHREN ZWISCHEN ZWEI ENDGERÄTEN
MULTI-PATH TCP COMMUNICATION METHOD BETWEEN TWO TERMINALS

(30) Priorité: 30.06.2014 FR 1456202
(43) Date de publication de la demande: 03.05.2017
(73) Titulaire: Orange, 75015 Paris (FR)
(72) Inventeur: BOUCADAIR, Mohamed, F-35830 Betton (FR); JACQUENET, Christian, F-35131 Pont-pean (FR)
(86) Numéro de dépôt international: PCT/FR2015/051744
(87) Numéro de publication internationale: WO 2016/001543

(56) Documents cités:
- WO-A1-2012/000724
- JP-A- 2010 206 454
- SCHARF ALCATEL-LUCENT BELL LABS A FORD CISCO M: "Multipath TCP (MPTCP) Application Interface Considerations; rfc6897.txt", MULTIPATH TCP (MPTCP) APPLICATION INTERFACE CONSIDERATIONS; RFC6897.TXT, INTERNET ENGINEERING TASK FORCE, IETF; STANDARD, INTERNET SOCIETY (ISOC) 4, RUE DES FALAISES CH- 1205 GENEVA, SWITZERLAND, 28 mars 2013 (2013-03-28), pages 1-31, XP015090329, -& WING A YOURTCHENKO CISCO D: "Happy Eyeballs: Success with Dual-Stack Hosts; rfc6555.txt", HAPPY EYEBALLS: SUCCESS WITH DUAL-STACK HOSTS; RFC6555.TXT, INTERNET ENGINEERING TASK FORCE, IETF; STANDARD, INTERNET SOCIETY (ISOC) 4, RUE DES FALAISES CH- 1205 GENEVA, SWITZERLAND, 6 avril 2012 (2012-04-06), pages 1-15, XP015081488,

## Description

La présente invention concerne le domaine des télécommunications, et notamment les réseaux de communications aptes à mettre en oeuvre le protocole IP (Internet Protocol). Plus particulièrement, la présente invention concerne la fourniture de services dans les réseaux IP « à valeur ajoutée », c'est-à-dire les réseaux capables d'effectuer des traitements différenciés selon la nature du trafic de données acheminé dans le réseau.

L'invention s'applique à tout type de dispositif-client tel qu'un terminal fixe ou mobile, ou une passerelle domestique (« *Residential Gateway* » en anglais), ou une passerelle située dans une entreprise, ou une passerelle d'opérateur réseau (« *Gateway* » en anglais), ou encore un décodeur TV (« *Set-Top Box* », ou STB en anglais). Par souci de concision, un dispositif-client de n'importe quel type sera souvent appelé « terminal » ci-après.

Les terminaux, tels que les téléphones intelligents (« *smartphone* » en anglais) et les ordinateurs personnels (« *Personal Computer* », ou PC en anglais) sont désormais capables d'activer et d'exploiter plusieurs interfaces logiques liées à une ou plusieurs interfaces physiques. De tels terminaux sont dits « multi-interfaces » (« *Multi-Interface* », ou MIF en anglais). Lorsqu'un terminal dispose de plusieurs interfaces capables de le raccorder à différents réseaux d'accès (par exemple : fixe, mobile, ou WLAN), il bénéficie alors d'un accès dit « hybride », parce qu'il combine différentes technologies de réseaux d'accès.

Plusieurs adresses IP peuvent alors être attribuées à ces terminaux MIF pour qu'ils puissent se connecter à différents types de réseaux tels qu'un réseau fixe, un réseau mobile ou un réseau WLAN (initiales des mots anglais « *Wireless Local Area Network* » signifiant « Réseau Local Sans-Fil », dont les réseaux Wi-Fi sont un exemple emblématique), de manière simultanée ou différée. Ces adresses IP peuvent :
- appartenir à la même famille d'adresses ou à des familles d'adresses distinctes (IPv4, IPv6 ou les deux),
- avoir des durées de vie différentes,
- avoir des portées différentes, par exemple adresse IPv4 privée, adresse IPv6 unique de portée locale (*Unique Local Address*, ou ULA en anglais), ou adresse IPv6 de portée globale (*Global Unicast Address*, ou GUA en anglais), et
- être affectées à la même interface réseau logique ou à différentes interfaces réseau logiques.

On notera toutefois que la caractéristique « MIF » est volatile, car la capacité d'utiliser plusieurs interfaces dépend des conditions de raccordement au(x) réseau(x), de la localisation du dispositif, ou d'autres facteurs. Un dispositif MIF peut notamment exploiter la pluralité d'interfaces dont il dispose en cours d'établissement d'une connexion simple (c'est-à-dire, une connexion établie le long d'un chemin unique avec un correspondant donné), voire après l'établissement d'une connexion simple. On notera également qu'un dispositif ne sait pas a priori s'il lui est possible d'utiliser *plusieurs* chemins distincts pour établir une connexion avec un correspondant donné ; plus précisément, le dispositif n'acquiert cette information (le cas échéant) qu'à l'issue d'une phase au cours de laquelle il tente d'établir une connexion utilisant des chemins multiples avec le correspondant.

On rappelle qu'une « connexion à chemins multiples » est une connexion établie entre deux dispositifs empruntant simultanément un ou plusieurs chemins entre ces deux dispositifs. Une telle connexion obéit à un protocole dédié, tel que MPTCP (Multi-Path TCP), qui peut éventuellement être défini comme une extension d'un protocole de transport défini antérieurement, tel que TCP (initiales des mots anglais « *Transmission Control Protocol* » signifiant « Protocole de Contrôle de Transmission »). Autrement dit, une connexion à chemins multiples est un agrégat d'une ou plusieurs connexions simples empruntant un même chemin ou des chemins différents (partiellement ou complètement disjoints).

On rappelle également que le protocole TCP, défini notamment dans la spécification RFC 793 de l'IETF (Internet Engineering Task Force), est l'un des protocoles principaux utilisé par les terminaux connectés à un réseau IP (par exemple, Internet), de sorte que la littérature évoque souvent la suite de protocoles « TCP/IP ». Le protocole TCP permet d'acheminer de manière fiable, ordonnée et sans erreurs un flux de données numériques entre des applications exécutées sur des terminaux connectés à un réseau local (par exemple, Intranet) ou à l'Internet. Il fonctionne au niveau de la couche transport du modèle OSI. Les navigateurs Web utilisent le protocole TCP lorsqu'ils se connectent à des serveurs distants ; le protocole TCP est aussi utilisé pour acheminer du courrier électronique ou pour transférer des fichiers d'un endroit à un autre. Des protocoles comme HTTP, HTTPS, SMTP, POP3, IMAP, SSH, FTP, Telnet, ainsi que de nombreux autres protocoles sont transportés sur des connexions TCP. Une connexion TCP est identifiée par l'adresse et le numéro de port du terminal source, ainsi que l'adresse et le numéro de port du terminal de destination.

Deux terminaux peuvent insérer des « options TCP » dans les messages TCP échangés entre eux, afin, par exemple, d'optimiser la qualité de la transmission TCP. De telles options occupent l'espace disponible en fin d'en-tête TCP, et ont une longueur (« *length* » en anglais) exprimée en octets. Le type (« *kind* » en anglais) d'option est un identifiant unique descriptif de la nature de l'option TCP. Par exemple, la valeur « 0 » indique la fin de la liste des options, et la valeur « 2 » indique la taille maximum du segment TCP (« *Maximum Segment Size* », ou MSS en anglais).

L'avènement des terminaux MIF introduit une complexité supplémentaire pour utiliser tout ou partie des adresses IP allouées via les réseaux disponibles. Notamment, étant donné que les connexions TCP sont associées à une adresse IP et un numéro de port, toute modification d'au moins l'une de ces informations est de nature à pénaliser le fonctionnement d'une connexion TCP en cours, et, partant, le service utilisant ladite connexion TCP. Ce changement est particulièrement préjudiciable lorsque le terminal se voit attribuer une nouvelle adresse IP, ou parce que le terminal se connecte à un autre réseau, ou encore lorsque l'interface à laquelle l'adresse IP est associée n'est plus disponible. Par exemple, des moyens pour informer un correspondant TCP distant qu'une adresse IP n'est plus valide sont alors nécessaires pour assurer le maintien d'une connexion existante.

Le groupe de travail *mptcp* de l'IETF a été missionné en 2009 pour spécifier des extensions du protocole TCP capables de s'accommoder des contraintes imposées par la possibilité d'affecter plusieurs adresses IP aux différentes interfaces logiques ou physiques d'un terminal. Ce groupe de travail a publié les premières spécifications du protocole MPTCP (cf. A. Ford, C. Raiciu et M. Handley, « *TCP Extensions for Multipath Operation with Multiple Addresses* », RFC 6824, janvier 2013), que certains téléphones intelligents et certains systèmes d'exploitation sont déjà capables de mettre en oeuvre. L'IETF envisage de faire progresser le statut des spécifications MPTCP actuelles, pour en faire de véritables normes au sens de l'IETF.

Le protocole MPTCP a donc été proposé pour minimiser les risques de rupture intempestive d'une connexion TCP liés à de telles modifications d'adressage, et plus généralement pour répondre aux exigences posées par un contexte où un terminal a la capacité de se raccorder à un ou plusieurs réseaux via une ou plusieurs interfaces. Le protocole MPTCP répond notamment au besoin d'assurer une continuité de session en cas de mobilité du terminal. Différents cas d'usage peuvent être envisagés pour le protocole MPTCP, tels que :
- transférer du trafic entre plusieurs points d'accès WLAN,
- décharger un réseau mobile, et basculer le trafic vers un point d'accès WLAN,
- agréger plusieurs liens d'accès,
- répartir la charge entre plusieurs chemins, et
- optimiser l'utilisation des ressources réseau.

On rappelle à cet égard (cf. Wikipedia) que « l'agrégation de liens » est, dans le domaine des réseaux, une notion décrivant le regroupement de plusieurs interfaces réseau comme s'il s'agissait d'une seule, dans le but d'accroître le débit au-delà des limites d'un seul lien, et éventuellement de faire en sorte que d'autres interfaces prennent le relais si un lien réseau tombe en panne (principe de redondance).

Un exemple particulièrement avantageux d'application du protocole MPTCP est le transfert de fichiers volumineux utilisant les ressources du protocole FTP (File Transfer Protocol). Un dispositif agissant en tant que client FTP peut dynamiquement exploiter l'ensemble des chemins disponibles qui lui permettent d'accéder à un serveur FTP, pourvu que ce dernier soit apte à mettre en oeuvre les différentes connexions MPTCP établies par le client FTP. Le temps de transfert des données est ainsi significativement réduit par rapport à une connexion TCP.

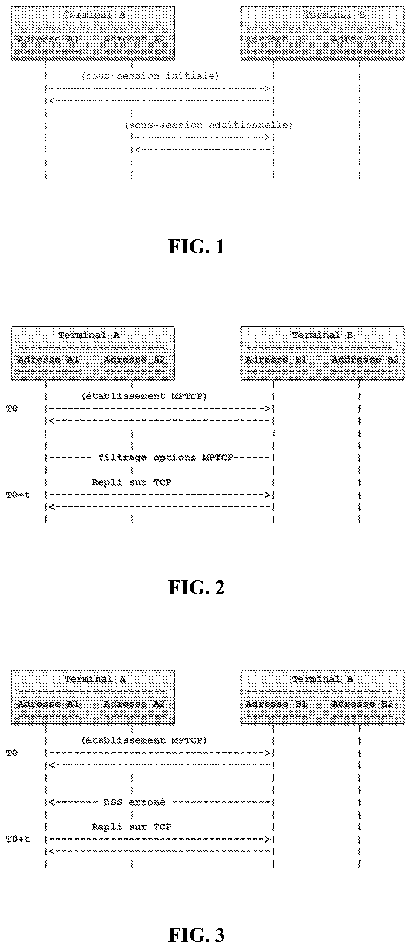

Dans le cadre de MPTCP, on appelle « sous-session » (« *sub-flow* » en anglais) une connexion TCP reposant sur l'utilisation de l'un des couples (adresse IP, numéro de port) disponibles. De ce fait, une connexion MPTCP est un agrégat de sous-sessions TCP. A titre d'exemple, la figure 1 montre une connexion MPTCP entre un terminal A et un terminal B ; la sous-session initiale est établie entre l'adresse A1 du terminal A et l'adresse B1 du terminal B ; ultérieurement, une sous-session additionnelle est établie entre l'adresse A2 du terminal A et l'adresse B1 du terminal B.

Les systèmes d'exploitation présentent aux applications des interfaces dédiées, appelées API (*Application Programming Interface*) pour interagir avec les couches TCP/IP. L'API classique présentée aux applications pour TCP/IP est l'interface « *socket* »*.* Une « *socket* » est caractérisée par plusieurs « attributs » tels que « *Local Socket Address* », « *Remote Socket Address* » et « *Protocol* ». De nouvelles extensions (API MPTCP) ont été spécifiées par l'IETF dans le document RFC 6897 pour permettre aux applications de contrôler les connexions MPTCP. On notera que l'API MPTCP est une extension de l'API TCP.

On appelle « table de connexion MPTCP » une structure logicielle utilisée pour grouper toutes les sous-sessions TCP associées à une même connexion MPTCP. Plusieurs attributs peuvent être utilisés pour caractériser une table de connexion MPTCP. En plus des attributs TCP/IP classiques mentionnés ci-dessus, une valeur est donnée à des attributs spécifiques au protocole MPTCP. La valeur de ces attributs de la table de connexion est contrôlée via l'API MPTCP.

Une connexion MPTCP est initialisée comme n'importe quelle connexion TCP classique, à l'exception du fait que l'option MP_CAPABLE (signifiant que le terminal émetteur est compatible avec les extensions MPTCP) est incluse dans le message contenant le drapeau d'initialisation de connexion (SYN) et dans les messages ultérieurs. Un terminal MPTCP peut signaler au terminal distant la disponibilité d'une adresse IP supplémentaire à l'aide de l'option ADD_ADDR, sans nécessairement créer de sous-session associée.

Toutefois, la signalisation de plusieurs adresses IP disponibles et susceptibles d'être utilisées pour communiquer avec un correspondant peut conduire à l'échec de l'établissement de certaines sous-sessions TCP parce que les adresses IP externes telles que perçues par les terminaux distants peuvent ne pas être les mêmes que celles visibles localement. Pour cette raison, l'option ADD_ADDR du protocole MPTCP comprend un identificateur d'adresse (« Address ID ») utilisé pour identifier sans ambiguïté une adresse IP disponible. Cette disposition est censée, selon l'état de l'art, éviter les problèmes induits par la présence d'un NAT (initiales des mots anglais « *Network Address Translator* » signifiant « Traducteur d'Adresse Réseau ») sur le chemin suivi par les paquets entre les deux terminaux qui ont établi une connexion MPTCP. L'option ADD_ADDR est également utilisée pour transmettre un numéro de port dans le cas où l'un des terminaux MPTCP n'utilise pas le même numéro de port pour l'ensemble des adresses IP disponibles.

De même, le protocole MPTCP prévoit des dispositions qui sont censées permettre, notamment, la traversée de pare-feux (« *firewall* » en anglais). Plus précisément, la spécification du protocole MPTCP stipule que les numéros de séquence tels qu'indiqués dans l'en-tête TCP sont spécifiques à chaque sous-session, tandis que le numéro de séquence indiqué dans l'option DSS (« *Data Sequence Signal* ») du protocole MPTCP sert à associer ces sous-sessions à la même connexion MPTCP.

Le protocole MPTCP entend ainsi faire face à la prolifération massive de « *middle* boxes » (équipements intermédiaires dans une chaîne de communication), comme les NAT et les pare-feux, dans les réseaux actuels. En outre, il est prévu dans le document RFC 6824 qu'en cas d'échec d'une tentative d'établissement d'une connexion MPTCP, la connexion se transforme automatiquement en une connexion TCP simple.

La demande JP 2010206454 divulgue un procédé de communication reposant sur une connexion TCP entre des premiers moyens de contrôle et des deuxièmes moyens de contrôle, comprenant :
- une étape de configuration dans laquelle lesdits premiers movens de contrôle établissent activement une première connexion TCP, et établissent passivement une deuxième connexion TCP établie activement par lesdits deuxièmes moyens de contrôle ;
- les premiers moyens de contrôle surveillant de manière continue la survenue éventuelle d'une panne affectant ladite première connexion TCP, une étape de notification de panne et de fermeture de la première connexion TCP par les premiers moyens de contrôle en cas de détection d'une panne affectant ladite première connexion TCP ; et
- une étape de communication par l'intermédiaire de ladite deuxième connexion TCP lorsque la première connexion TCP est en panne.

La demande WO 201200724 divulgue un procédé de communication dans lequel on établit tout d'abord une connexion simple selon un premier chemin, puis on établit une connexion à chemins multiples selon ce premier chemin et selon un deuxième chemin ; ladite connexion simple selon le premier chemin est alors soit abandonnée, soit conservée pour servir de position de repli.

Malheureusement, en dépit de toutes ces précautions, d'autres problèmes peuvent surgir lors de la tentative d'établissement d'une connexion MPTCP. Par exemple :
- certaines options MPTCP, voire toutes, peuvent être filtrées (c'est-à-dire, retirées) par des équipements intermédiaires (par exemple, un NAT ou un pare-feu) situés en coupure de flux entre deux pairs MPTCP, comme illustré sur la **figure 2** ;
- même si les messages SYN MPTCP (mentionnés ci-dessus) sont échangés avec succès entre deux pairs MPTCP, des équipements intermédiaires peuvent filtrer les options DSS (mentionnées ci-dessus) des paquets de données ; dans ce cas, comme illustré sur la **figure 3**, la tentative d'établissement d'une connexion MPTCP ne peut pas aboutir, avec comme conséquence le repli sur une connexion TCP simple comme dans le cas illustré en référence à la **figure 2** ;
- il peut se produire qu'une première sous-session TCP soit établie avec succès, mais que l'établissement de sous-sessions ultérieures échoue faute de l'existence de chemins multiples compatibles avec les extensions MPTCP.

Or les auteurs de la présente invention ont réalisé que la présence de tels équipements intermédiaires avait pour effet de prolonger sensiblement le délai d'établissement de sous-sessions TCP et, par conséquent, avait un impact négatif sur la qualité du service de communication, telle que perçue par l'utilisateur.

La présente invention concerne donc un procédé de communication entre un premier dispositif-client et un second dispositif-client conforme à la revendication 1.

Ainsi, selon l'invention, on initialise de manière concomitante une connexion TCP simple et une connexion à chemins multiples. On dira que cette connexion TCP simple est une connexion TCP « duale ». Lorsque deux pairs établissent une connexion à chemins multiples :
- si aucun d'entre eux ne détecte d'anomalie, ils peuvent intégrer la connexion TCP duale à la connexion à chemins multiples ;
- si, en revanche, une anomalie a été détectée lors de l'établissement de la connexion à chemins multiples (par exemple, un délai trop long d'établissement de la connexion à chemins multiples comparé à celui observé pour la connexion TCP duale, ou l'absence de certaines options MPTCP lorsque les deux pairs sont configurés pour mettre en oeuvre MPTCP), les pairs peuvent utiliser la connexion TCP duale pour échanger des données utiles, de façon à garantir la continuité du service ; ce repli sur une connexion TCP simple ne cause, avantageusement, aucun délai supplémentaire puisque cette connexion TCP est déjà en cours d'établissement, voire déjà en place.

Grâce à ces dispositions, lorsque le second dispositif-client ou second dispositif-relais est compatible avec les connexions à chemins multiples, la mise en place de ladite connexion à chemins multiples est confortée. En effet, il peut se produire que le second dispositif-client ou le second dispositif-relais accepte difficilement une connexion supplémentaire (c'est-à-dire, la connexion à chemins multiples ou la connexion TCP duale) avec un même pair (en l'occurrence, le premier dispositif-client ou le premier dispositif-relais), en raison, par exemple, de dispositions destinées à protéger le réseau contre les attaques par déni de service (« *Denial of Service* », ou DoS en anglais), ou d'une configuration du second dispositif-client ou second dispositif-relais (par exemple, un serveur Web accessible en HTTP) destinée à limiter le nombre de connexions par client. C'est pourquoi, selon l'invention, le premier dispositif-client ou le premier dispositif-relais indique explicitement au second dispositif-client ou au second dispositif-relais qu'il souhaite qu'une connexion à chemins multiples soit associée, selon le même chemin, à la connexion TCP simple en cours d'établissement.

On notera que l'invention peut être mise en oeuvre par tout dispositif-client compatible avec TCP. Ce dispositif-client peut disposer d'une ou plusieurs adresses externes, ou d'une ou plusieurs interfaces réseau (logiques ou physiques). Mais ce dispositif-client peut ne disposer que d'une seule interface s'il est situé derrière un dispositif-relais (tel qu'un routeur ou une passerelle résidentielle) connecté à un ou plusieurs réseau(x) et compatible avec les options TCP à chemins multiples.

Les dispositifs communicants visés (dispositifs-clients et dispositifs-relais) peuvent être de type quelconque, par exemple un terminal, un routeur ou une passerelle résidentielle.

Grâce à l'invention, ces dispositifs communicants peuvent découvrir les capacités d'éventuels « équipements intermédiaires » (tels que mentionnés ci-dessus), et anticiper l'échec de connexions TCP à chemins multiples. Il en résulte une réduction du délai d'établissement de connexions à chemins multiples, et donc évidemment une qualité d'expérience utilisateur sensiblement améliorée.

De plus, un tel dispositif communicant peut :
- ajuster son comportement en fonction de son attachement réseau (par exemple, en cas d'attachement à un nouveau réseau, d'indisponibilité d'une interface réseau, ou de la détection d'un « équipement intermédiaire »),
- décider, sans risquer de dégrader la qualité de la communication avec son correspondant, d'activer une connexion à chemins multiples, ou de désactiver une connexion à chemins multiples en cours ou toutes ses connexions à chemins multiples en cours, ou encore d'ajouter une nouvelle sous-session TCP à une connexion à chemins multiples en cours, et
- rétablir une connexion à chemins multiples si les circonstances qui ont précédemment causé un repli vers une connexion TCP simple ont changé.

Par ailleurs, ladite connexion à chemins multiples pourra avantageusement être conforme au protocole MPTCP, de manière à bénéficier des dispositions, mentionnées succinctement ci-dessus, de ce protocole.

Selon des caractéristiques particulières, lors de ladite étape b), ledit second dispositif-client ou second dispositif-relais initialise ladite connexion à chemins multiples suite à la réception dudit message d'initialisation d'une connexion TCP envoyé par ledit premier dispositif-client ou premier dispositif-relais lors de ladite étape a).

Grâce à ces dispositions, on évite que le premier dispositif-client ou premier dispositif-relais ne tente vainement d'initialiser une connexion à chemins multiples avec le second dispositif-client ou second dispositif-relais, faute de compatibilité de ce dernier avec les connexions à chemins multiples.

On notera que l'invention vise notamment le cas où il existe au moins deux chemins de communication *possibles* entre un premier dispositif-client et un second dispositif-client, même s'il n'existe qu'un seul chemin utilisable lors de l'initialisation de la connexion TCP. De préférence, l'invention sera mise en oeuvre pour *chacun* des chemins de communication possibles entre les deux dispositifs-clients, suite à la découverte de ce chemin par l'un ou l'autre de ces dispositifs-clients.

C'est pourquoi, selon d'autres caractéristiques particulières, si aucune anomalie concernant ladite connexion à chemins multiples n'est constatée, et s'il existe entre lesdits premier et second dispositifs-clients au moins un chemin autre que ledit premier chemin :
- on vérifie la compatibilité dudit autre chemin avec les options TCP propres à la connexion à chemins multiples, et
- si ladite vérification est positive, le premier et le second dispositifs-clients échangent entre eux, au sein de la connexion à chemins multiples, des données utiles via cet autre chemin en sus dudit premier chemin.

Grâce à ces dispositions, on bénéficie au maximum des possibilités offertes par la connexion à chemins multiples.

Selon des caractéristiques encore plus particulières, pour effectuer ladite vérification de la compatibilité dudit autre chemin, le premier dispositif-client ou premier dispositif-relais, ou le second dispositif-client ou second dispositif-relais, émet un message d'initialisation d'une sous-session selon ledit autre chemin au sein de ladite communication à chemins multiples, ledit message d'initialisation d'une sous-session comprenant une option TCP indiquant que ladite sous-session ne doit pas être utilisée pour échanger des données utiles avant une conclusion positive de ladite vérification.

Grâce à ces dispositions, les deux pairs peuvent commodément tester de nouveaux chemins (pouvant donner lieu à de nouvelles sous- sessions) au sein de la communication à chemins multiples, sans risquer de dégrader la qualité de cette communication.

Corrélativement, l'invention concerne divers dispositifs.

Elle concerne ainsi, premièrement, un dispositif communicant, dit premier dispositif communicant conforme à la revendication 6.

L'invention concerne aussi, deuxièmement, un dispositif communicant, dit second dispositif communicant, conforme à la revendication 7.

Selon des caractéristiques particulières, ledit premier dispositif communicant ou ledit deuxième dispositif communicant pourra comprendre en outre des moyens pour, lorsqu'il existe au moins un chemin autre que ledit premier chemin le connectant audit autre dispositif communicant, émettre un message d'initialisation d'une sous-session selon ledit autre chemin au sein de ladite communication à chemins multiples, ledit message d'initialisation d'une sous-session comprenant une option TCP indiquant que ladite sous-session ne doit pas être utilisée pour échanger des données utiles avant une conclusion positive d'une vérification de la compatibilité de cet autre chemin avec les options TCP propres à la connexion à chemins multiples.

Les avantages offerts par ces dispositifs communicants sont essentiellement les mêmes que ceux offerts par les procédés corrélatifs succinctement exposés ci-dessus.

Ledit premier dispositif communicant ou ledit deuxième dispositif communicant pourra comprendre un dispositif-client, tel qu'un terminal d'utilisateur, ou un dispositif-relais, tel qu'un routeur ou une passerelle résidentielle.

On notera qu'il est possible de réaliser ces dispositifs communicants dans le contexte d'instructions logicielles et/ou dans le contexte de circuits électroniques.

L'invention vise également un moyen de stockage selon la revendication 11 et un programme d'ordinateur téléchargeable depuis un réseau de communications et/ou stocké sur un support lisible par ordinateur et/ou exécutable par un microprocesseur, conforme à la revendication 12. Ce programme d'ordinateur est remarquable en ce qu'il comprend des instructions pour l'exécution des étapes du procédé de communication succinctement exposé ci-dessus, lorsqu'il est exécuté sur un ordinateur.

Les avantages offerts par ce programme d'ordinateur sont essentiellement les mêmes que ceux offerts par ledit procédé.

D'autres aspects et avantages de l'invention apparaîtront à la lecture de la description détaillée ci-dessous de modes de réalisation particuliers, donnés à titre d'exemples non limitatifs. La description se réfère aux figures qui l'accompagnent, dans lesquelles :
- la figure 1, décrite ci-dessus, représente un agrégat de sous-sessions TCP formant une unique connexion MPTCP,
- la figure 2, décrite ci-dessus, représente l'échec d'une tentative d'établissement d'une sous-session MPTCP vers le terminal B à partir d'un terminal A, suite au filtrage des options MPTCP par des équipements intermédiaires,
- la figure 3, décrite ci-dessus, représente l'échec d'une tentative d'établissement d'une sous-session MPTCP vers le terminal B à partir d'un terminal A, suite au filtrage des options DSS par des équipements intermédiaires,
- la figure 4 illustre l'option DUAL selon l'invention,
- la figure 5 illustre un exemple de configuration de réseau comprenant trois terminaux D1, D2 et D3,
- la figure 6 illustre les sous-sessions TCP établies entre les terminaux D1 et D3 de la figure 5,
- la figure 7 illustre l'option PROBE selon l'invention, et
- la figure 8 illustre un exemple d'application de l'invention à une configuration de réseau comprenant un terminal T1 placé derrière un dispositif-relais R.

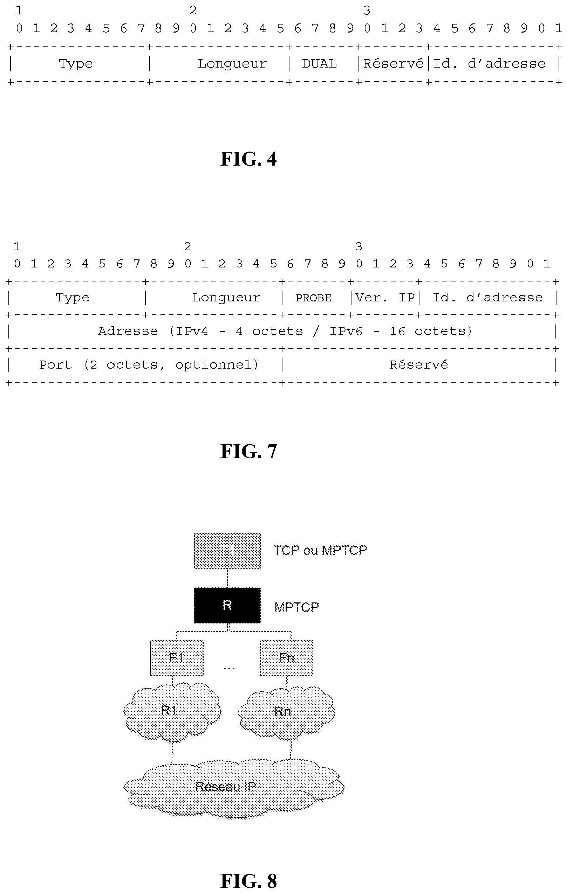

L'invention propose une nouvelle option TCP, que l'on appellera « DUAL », et qui est illustrée sur la **figure 4****.** Cette option DUAL comprend les champs suivants :
- « Type » : indique le type d'option ; ce champ inclut un identifiant unique descriptif de la nature de l'option TCP ;
- « Longueur » : ce champ indique la longueur de l'option, exprimée en octets ;
- « DUAL » : ce champ indique le sous-type de cette option à chemins multiples pour distinguer d'une manière non-ambiguë l'option DUAL des autres options à chemins multiples ;
- « Réservé » : ce champ est réservé pour un usage futur ;
- « Id. d'adresse » : ce champ indique l'identifiant d'une adresse IP.

L'option DUAL est utilisée par un terminal pour indiquer à un pair que la connexion TCP est une connexion duale, c'est-à-dire qu'une connexion à chemins multiples doit être initialisée concomitamment à cette connexion TCP.

L'invention propose également plusieurs nouveaux attributs à inclure dans les tables de connexion à chemins multiples. Ces attributs sont les suivants :
- PATH_CHECKED : ce champ est valorisé à « 1 » pour indiquer qu'une sous-session TCP est compatible avec les extensions à chemins multiples, et valorisé à « 0 » dans le cas contraire, et
- DUAL : ce champ est valorisé à « 1 » pour indiquer qu'une connexion TCP duale concomitante à cette connexion à chemins multiples est active ; la valeur « 0 » est utilisée pour indiquer qu'aucune connexion TCP simple n'est associée à cette connexion à chemins multiples.

L'invention s'applique de manière générale à tout protocole concernant les connexions TCP à chemins multiples. On va décrire à présent l'application de l'invention au protocole MPTCP décrit succinctement ci-dessus. En particulier, l'API MPTCP, mentionnée ci-dessus, doit être modifiée pour que l'on puisse transmettre aux applications la valeur des attributs DUAL et PATH_CHECKED selon l'invention.

Le protocole MPTCP comprend classiquement un certain nombre de dispositions incluant notamment la définition des options TCP suivantes :
- MP_CAPABLE : cette option est utilisée pour signaler au terminal distant que le terminal émetteur est compatible avec les extensions MPTCP ;
- ADD_ADDR : cette option est utilisée pour ajouter une nouvelle adresse ; elle comprend un champ optionnel de deux octets permettant de fournir également un numéro de port, le cas échéant ;
- REMOVE_ADDR : cette option est utilisée pour supprimer une adresse ;
- MP_PRIO : cette option est utilisée pour modifier la priorité d'une connexion ;
- MP_JOIN : cette option est utilisée pour identifier la connexion TCP qui est associée à l'établissement d'une nouvelle sous-session ;
- MP_FAIL : cette option est utilisée pour revenir au mode TCP sans options MPTCP ; et
- MP_FASTCLOSE : cette option est utilisée pour clôturer rapidement une connexion MPTCP.

Le protocole MPTCP peut être activé selon plusieurs modes :
- *mode natif* : deux terminaux MPTCP établissent toutes les sous-sessions qui correspondent aux numéros des adresses/ports disponibles, et utilisent l'ensemble de ces sous-sessions ;
- *mode primaire* : deux terminaux MPTCP signalent des sous-sessions, mais seul un sous-ensemble de ces sous-sessions est effectivement utilisé pour le transfert de données ;
- *mode secondaire* : en cas d'indisponibilité (ou de surcharge) du sous-ensemble « primaire » de sous-sessions, un sous-ensemble « secondaire » de sous-sessions est alors sollicité pour assurer la continuité de la connexion MPTCP ; et
- *mode repli* : deux terminaux MPTCP utilisent une sous-session unique ; en cas de panne, le trafic est basculé vers une nouvelle sous-session créée à cet effet.

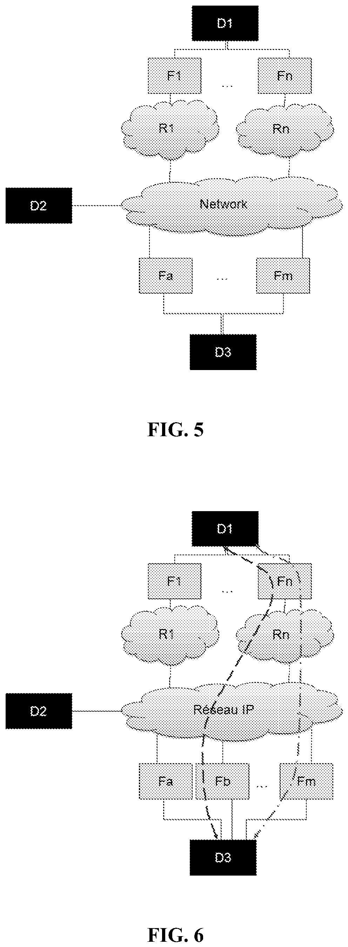

La **figure 5** illustre un exemple de configuration de réseau comprenant trois terminaux D1, D2 et D3. On voit sur cette figure :
- un terminal D1 connecté à un ou plusieurs réseaux IP via n noeuds de raccordement (F1, F2, ..., Fn) et n réseaux d'accès R1, R2, ..., Rn respectifs ; ces noeuds de raccordement peuvent héberger des fonctions NAT, pare-feu, et ainsi de suite, ou être des routeurs IP qui n'embarquent aucune fonction service avancée telle qu'un NAT ou un pare-feu ; on suppose que :
   ∘F1 filtre les options MPTCP,
   ∘F2 ne filtre que les options MPTCP des paquets de données, et
   ∘Fn ne filtre ni ne modifie aucune des options MPTCP ;
- un terminal D2 connecté à un réseau IP via un seul noeud de raccordement ; on suppose que D2 est compatible avec MPTCP, et qu'une adresse IP unique lui a été allouée ; et
- un terminal D3 connecté à un ou plusieurs réseaux IP via m noeuds de raccordement (Fa, Fb, ..., Fm) ; ces noeuds peuvent héberger des fonctions NAT, pare-feu, et ainsi de suite, ou être des routeurs IP qui n'embarquent aucune fonction service avancée telle qu'un NAT ou un pare-feu ; on suppose que :
   ∘Fa filtre les options MPTCP,
   ∘Fb ne filtre ni ne modifie aucune des options MPTCP, et
   ∘Fm ne filtre ni ne modifie aucune des options MPTCP.

Comme illustré sur la **figure 6**, les chemins MPTCP valides entre D1 et D3 sont alors les suivants :
- le chemin passant par Fn et Fb, et
- le chemin passant par Fn et Fm.

Les terminaux D1 et D3 ne peuvent pas utiliser MPTCP si d'autres chemins que ces deux chemins sont sélectionnés pour échanger des données entre D1 et D3. De plus, D1 et D3 ne disposent pas de moyens pour identifier la cause de l'échec de l'établissement d'une connexion à chemins multiples. En particulier, ils ne peuvent pas déterminer si la cause de cet échec est une défaillance des équipements intermédiaires côté D1, côté D3, ou entre les deux.

On va décrire à présent, à titre d'exemple, plusieurs modes de réalisation du procédé selon l'invention, dans lesquels on suppose qu'un terminal T1 veut établir une connexion MPTCP avec un terminal T2.

Selon un premier mode de réalisation, on met en oeuvre les étapes suivantes.

Lors d'une étape E1, le terminal T1 initialise, selon un premier chemin, une connexion TCP ainsi qu'une connexion MPTCP vers le terminal T2. Le terminal T1 inclut l'option DUAL dans son message d'initialisation pour indiquer au terminal T2 qu'il souhaite participer avec lui à la fois à une connexion TCP et à une connexion MPTCP selon ce premier chemin. Le terminal T1 peut initialiser les deux connexions en même temps ou avec un décalage temporel (positif ou négatif) entre les deux connexions.

Lors d'une étape E2, le terminal T2 répond au terminal T1 avec un message « SYN/ACK » ne contenant pas l'option MP_CAPABLE. Le terminal T1 en déduit que le terminal T2 n'est pas compatible avec les extensions MPTCP.

Enfin, lors d'une étape E3, le terminal T1 met fin à la connexion MPTCP, et les deux terminaux échangent des données via la connexion TCP.

On notera que les deux terminaux échangent ainsi des données avec succès sur la connexion TCP, sans que ce repli ne cause aucun délai puisque la connexion TCP était déjà en place.

Selon un deuxième mode de réalisation, on met en oeuvre les étapes suivantes.

Lors d'une étape E'1, le terminal T1 initialise, selon un premier chemin, une connexion TCP vers le terminal T2. Le terminal T1 inclut l'option DUAL dans son message d'initialisation pour indiquer au terminal T2 qu'il souhaite participer avec lui à la fois à une connexion TCP et à une connexion MPTCP selon ce premier chemin. Le terminal T2, qui est compatible avec les extensions MTPCP, répond au terminal T1 en initialisant une connexion MPTCP.

Lors d'une étape E'2, le terminal T2 détecte une anomalie (par exemple, l'absence de l'une des options MPTCP), et notifie le terminal T1 du fait qu'il a constaté une anomalie.

Enfin, lors d'une étape E'3, les deux terminaux mettent fin à la connexion MPTCP, et échangent des données via la connexion TCP.

On notera ici encore que les deux terminaux échangent ainsi des données avec succès sur la connexion TCP, sans que ce repli ne cause aucun délai puisque la connexion TCP était déjà en place.

Selon un troisième mode de réalisation, on met en oeuvre les étapes suivantes.

Lors d'une étape E"1, le terminal T1 initialise, selon un premier chemin, une connexion TCP vers le terminal T2. Le terminal T1 inclut l'option DUAL dans son message d'initialisation pour indiquer au terminal T2 qu'il souhaite participer avec lui à la fois à une connexion TCP et à une connexion MPTCP selon ce premier chemin. Le terminal T2, qui est compatible avec les extensions MTPCP, répond au terminal T1 en initialisant une connexion MPTCP.

Lors d'une étape E"2, aucun des deux terminaux n'ayant détecté d'anomalie lors de l'échange de données en utilisant la connexion MPTCP, ils peuvent mettre fin à la connexion TCP et ne maintenir que la connexion MPTCP. Les deux terminaux peuvent échanger des messages pour coordonner la clôture de la connexion TCP ; cette coordination permettra de décharger la connexion TCP et de n'utiliser que la connexion MPTCP pour l'envoi des données. En variante, les deux terminaux peuvent décider de ne mettre fin à la connexion TCP qu'à l'issue de l'étape E"3 ci-dessous. Selon encore une autre variante, ils peuvent maintenir la connexion TCP afin de faciliter la bascule au cas où les chemins multiples compatibles avec MPTCP deviennent ultérieurement indisponibles.

Lors d'une étape E"3, la première sous-session MPTCP ayant été établie avec succès, on vérifie, le cas échéant, la compatibilité avec les extensions MPTCP d'éventuels chemins (donc de sous-sessions TCP) entre les terminaux T1 et T2 autres que ledit premier chemin.

La découverte de ces autres chemins peut être réalisée, par exemple, à l'aide d'un protocole d'allocation dynamique d'adresses IP comme DHCP (Dynamic Host Configuration Protocol), ou par un mécanisme de création de *mapping*, tel que PCP (Port Control Protocol), UPnP (Universal Plug and Play), IGD (Internet Gateway Device), ou STUN (Session Traversai Utilities for NAT). On rappelle à cet égard que l'on appelle « *mapping* » l'association d'une adresse IP interne et d'un numéro de port interne avec une adresse IP externe et un numéro de port externe. Dans le cas d'une fonction NAT, l'adresse IP interne et le numéro de port interne sont les informations servant de données d'entrée, alors que l'adresse IP externe et le numéro de port externe sont alloués par la fonction NAT. Dans le cas d'un pare-feu, les informations internes et externes sont identiques. Un « *mapping* » peut inclure d'autres informations, telles que l'adresse IP et le numéro de port du correspondant ou un identifiant du protocole de communication utilisé.

Cette vérification de la compatibilité avec les extensions MPTCP peut, par exemple, être mise en oeuvre par les terminaux T1 et T2 eux-mêmes en stimulant l'initialisation de sous-sessions TCP à l'aide d'une option TCP selon la présente invention, que l'on appellera « PROBE », et qui est illustrée sur la **figure 7****.**

La présence de l'option PROBE est une indication au terminal distant que la sous-session concernée ne devrait, de préférence, pas être utilisée (provisoirement) pour l'échange de données utiles, mais qu'elle est initialisée afin de vérifier la compatibilité du chemin sous-jacent avec les extensions TCP à chemins multiples. L'utilisation de l'option PROBE n'est pas exclusive au terminal qui a initié la connexion TCP à chemins multiples. Ainsi, des sous-sessions de test (incluant l'option PROBE) peuvent être établies à l'initiative de l'un des pairs ou des deux à la fois. Les deux pairs T1 et T2 peuvent initier, chacun de son côté, une sous-session de test associée au même chemin. Plusieurs sous-sessions de test peuvent être initiées simultanément.

L'option PROBE comprend les champs suivants :
- « Type » : indique le type d'option ; ce champ inclut un identifiant unique descriptif de la nature de l'option TCP ;
- « Longueur » : ce champ indique la longueur de l'option, exprimée en octets ;
- « PROBE » : ce champ indique le sous-type de cette option à chemins multiples pour distinguer d'une manière non-ambiguë l'option PROBE des autres options à chemins multiples ;
- « Ver. IP » : ce champ renseigne la famille d'adresses (IPv4, IPv6) à laquelle appartient l'adresse incluse dans le champ « Adresse » ;
- « Id. d'adresse » : ce champ indique l'identifiant d'une adresse IP ;
- « Adresse » : ce champ est utilisé pour inclure une adresse IP ; il peut s'agir d'une adresse IPv4 ou d'une adresse IPv6 ;
- « Port » : ce champ est optionnel ; il mentionne, s'il est présent, un numéro de port ;
- « Réservé » : ce champ est réservé pour un usage futur ; par exemple, ce champ peut par exemple être utilisé pour demander au pair distant d'initialiser une sous-session afin de tester le chemin retour (car le routage est asymétrique), d'injecter certains types de paquets, ou de réguler le débit de la sous-session.

Enfin, le cas échéant, lors d'une étape E"4, pour au moins l'un des éventuels chemins entre les terminaux T1 et T2 autres que ledit premier chemin :
- si, suite à ladite vérification, cet autre chemin s'avère être compatible avec les options MPTCP, l'attribut PATH_CHECKED associé à ce chemin est valorisé à « 1 » ; les deux terminaux peuvent alors, au besoin, utiliser la sous-session TCP associée à cet autre chemin, en sus de la sous-session TCP associée au premier chemin, pour échanger des données au sein de la connexion MPTCP ; et
- si, en revanche, cet autre chemin s'avère être incompatible avec les options MPTCP, l'attribut PATH_CHECKED associé à ce chemin est valorisé à « 0 » ; cet autre chemin ne pourra évidemment pas être utilisé par les terminaux T1 et T2 pour établir entre eux une sous-session TCP supplémentaire, ou pour l'initialisation d'une autre connexion TCP duale associée à une autre connexion MPTCP impliquant ces deux pairs.

On notera que, optionnellement, un terminal pourra vérifier la compatibilité d'éventuels autres chemins avant même d'avoir initialisé la première connexion MPTCP.

Aussi longtemps que la connexion TCP duale n'a pas été clôturée, les participants à une connexion MPTCP peuvent exécuter ladite procédure de test à chaque changement de condition d'accès au réseau, notamment en cas de détection de nouveau(x) réseau(x) ou de détection de nouveaux chemins :
- en cas de test positif, les deux terminaux pourront basculer de la connexion TCP duale établie concomitamment avec une connexion MPTCP, vers cette connexion MPTCP ;
- inversement, en cas de test négatif, c'est-à-dire s'il s'avère qu'aucun chemin multiple n'est compatible avec les options MPTCP, alors la connexion MPTCP bascule vers la connexion TCP duale.

La **figure 8** illustre un exemple d'application de l'invention à une configuration de réseau comprenant un terminal TCP ou MPTCP T1 placé derrière un dispositif-relais R, tel qu'un routeur ou une passerelle résidentielle, compatible avec MPTCP. Le dispositif-relais R met en oeuvre la présente invention pour communiquer avec des terminaux distants.

Ce dispositif-relais R est connecté à un ou plusieurs réseau(x) IP via n noeuds de raccordement (F1, F2, ..., Fn) et n réseaux d'accès R1, R2, ..., Rn respectifs ; ces noeuds de raccordement peuvent héberger des fonctions NAT, pare-feu, et ainsi de suite, ou être des routeurs IP qui n'embarquent aucune fonction service avancée telle qu'un NAT ou un pare-feu.

L'invention peut être mise en oeuvre au sein de noeuds de réseaux de communications, par exemple des terminaux, des routeurs ou des passerelles, au moyen de composants logiciels et/ou matériels.

Les composants logiciels pourront être intégrés à un programme d'ordinateur classique de gestion de noeud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en oeuvre de l'un quelconque des procédés de communication selon l'invention.

En effet, l'invention vise aussi un programme d'ordinateur tel que décrit succinctement ci-dessus. Ce programme d'ordinateur peut être stocké sur un support lisible par ordinateur et peut être exécutable par un microprocesseur. Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations, inamovible, ou partiellement ou totalement amovible, lisible par un ordinateur, et comportant des instructions d'un programme d'ordinateur tel que décrit succinctement ci-dessus.

Ce support d'informations peut être n'importe quelle entité ou dispositif capable de stocker le programme. Par exemple, le support peut comprendre un moyen de stockage, tel qu'une ROM, par exemple un CD ROM ou une ROM de circuit microélectronique, ou un moyen d'enregistrement magnétique, tel qu'un disque dur, ou encore une clé USB (« *USB flash drive* » en anglais).

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme est incorporé, le circuit étant adapté pour exécuter ou pour être utilisé dans l'exécution de l'un quelconque des procédés de communication selon l'invention.

## Revendications

1. Procédé de communication entre un premier dispositif-client et un second dispositif-client, comprenant les étapes suivantes :
a) ledit premier dispositif-client ou un premier dispositif-relais connecté au premier dispositif-client envoie audit second dispositif-client ou à un second dispositif-relais connecté au second dispositif-client un message d'initialisation d'une connexion TCP, Transmission Control Protocol, selon un chemin, dit premier chemin, ledit message d'initialisation comprenant une option TCP,
b) ledit premier dispositif-client ou premier dispositif-relais et ledit second dispositif-client ou second dispositif-relais participent à une connexion TCP et à une connexion à chemins multiples entre eux selon le premier chemin, et
c) si au moins l'un des deux dispositifs-clients ou l'un des deux dispositifs-relais constate une anomalie concernant ladite connexion à chemins multiples, le premier dispositif-client et le second dispositif-client utilisent ladite connexion TCP pour échanger des données utiles,
**caractérisé en ce que** ladite option TCP indique que le premier dispositif-client ou premier dispositif-relais souhaite participer avec le second dispositif-client ou second dispositif-relais à la fois à une connexion TCP et à une connexion à chemins multiples selon ledit premier chemin, et **en ce que** ladite option TCP indique qu'une connexion à chemins multiples selon le premier chemin doit en réponse être acceptée ou initialisée par le second dispositif-client ou le second dispositif-relais, si le second dispositif-client ou le second dispositif-relais est compatible avec une connexion à chemins multiples.

2. Procédé de communication selon la revendication 1, **caractérisé en ce que**, lors de ladite étape b), ledit second dispositif-client ou second dispositif-relais initialise ladite connexion à chemins multiples suite à la réception dudit message d'initialisation d'une connexion TCP envoyé par ledit premier dispositif-client ou premier dispositif-relais lors de ladite étape a).

3. Procédé de communication selon la revendication 1 ou la revendication 2, **caractérisé en ce que**, si aucune anomalie concernant ladite connexion à chemins multiples n'est constatée, et s'il existe entre lesdits premier et second dispositifs-clients au moins un chemin autre que ledit premier chemin :
- on vérifie la compatibilité dudit autre chemin avec les options TCP propres à la connexion à chemins multiples, et
- si ladite vérification est positive, le premier et le second dispositifs-clients échangent entre eux, au sein de la connexion à chemins multiples, des données utiles via cet autre chemin en sus dudit premier chemin.

4. Procédé de communication selon la revendication 3, **caractérisé en ce que**, pour effectuer ladite vérification de la compatibilité dudit autre chemin, le premier dispositif-client ou premier dispositif-relais, ou le second dispositif-client ou second dispositif-relais, émet un message d'initialisation d'une sous-session selon ledit autre chemin au sein de ladite communication à chemins multiples, ledit message d'initialisation d'une sous-session comprenant une option TCP indiquant que ladite sous-session ne doit pas être utilisée pour échanger des données utiles avant une conclusion positive de ladite vérification.

5. Procédé de communication selon l'une quelconque des revendications 1 à 4, **caractérisé en ce que** ladite connexion à chemins multiples met en oeuvre le protocole MPTCP, Multi-Path TCP.

6. Dispositif communicant, dit premier dispositif communicant, possédant des moyens pour participer à une communication TCP, Transmission Control Protocol, ainsi que des moyens pour :
- envoyer à un autre dispositif communicant, dit second dispositif communicant, un message d'initialisation d'une connexion TCP selon un chemin, dit premier chemin, ledit message d'initialisation comprenant une option TCP,
- initialiser également une connexion à chemins multiples avec le second dispositif communicant selon le premier chemin, et
- s'il constate une anomalie concernant ladite connexion à chemins multiples, utiliser ladite connexion TCP pour échanger des données utiles avec le second dispositif communicant,
**caractérisé en ce que** ladite option TCP indique que le premier dispositif communicant souhaite participer avec le second dispositif communicant à la fois à une connexion TCP et à une connexion à chemins multiples selon ledit premier chemin, et ladite option TCP indique qu'une connexion à chemins multiples selon le premier chemin doit en réponse être acceptée ou initialisée par le second dispositif-client ou le second dispositif-relais, si le second dispositif-client ou le second dispositif-relais est compatible avec une connexion à chemins multiples.

7. Dispositif communicant, dit second dispositif communicant, possédant des moyens pour participer à une communication TCP, Transmission Control Protocol, ainsi que des moyens pour :
- recevoir de la part d'un autre dispositif communicant, dit premier dispositif communicant, un message d'initialisation d'une connexion TCP selon un chemin, dit premier chemin, ledit message d'initialisation comprenant une option TCP,
- accepter ou initialiser une connexion à chemins multiples avec le premier dispositif communicant selon le premier chemin, et
- s'il constate une anomalie concernant ladite connexion à chemins multiples, utiliser ladite connexion TCP pour échanger des données utiles avec le premier dispositif communicant,
**caractérisé en ce que** ladite option TCP indique que le premier dispositif communicant souhaite participer avec le second dispositif communicant à la fois à une connexion TCP et à une connexion à chemins multiples selon ledit premier chemin, et ladite option TCP indique qu'une connexion à chemins multiples selon le premier chemin doit en réponse être acceptée ou initialisée par le second dispositif-client ou le second dispositif-relais, si le second dispositif-client ou le second dispositif-relais est compatible avec une connexion à chemins multiples..

8. Dispositif communicant selon la revendication 6 ou la revendication 7, **caractérisé en ce qu'**il comprend en outre des moyens pour, lorsqu'il existe au moins un chemin autre que ledit premier chemin le connectant audit autre dispositif communicant, émettre un message d'initialisation d'une sous-session selon ledit autre chemin au sein de ladite communication à chemins multiples, ledit message d'initialisation d'une sous-session comprenant une option TCP indiquant que ladite sous-session ne doit pas être utilisée pour échanger des données utiles avant une conclusion positive d'une vérification de la compatibilité de cet autre chemin avec les options TCP propres à la connexion à chemins multiples.

9. Dispositif communicant selon l'une quelconque des revendications 6 à 8, **caractérisé en ce qu'**il comprend un dispositif-client.

10. Dispositif communicant selon l'une quelconque des revendications 6 à 8, **caractérisé en ce qu'**il comprend un dispositif-relais.

11. Moyen de stockage de données inamovible, ou partiellement ou totalement amovible, comportant des instructions de code de programme informatique qui, lorsqu'elles sont exécutées par un ordinateur, conduisent celui-ci à mettre en oeuvre les étapes d'un procédé de communication selon l'une quelconque des revendications 1 à 5.

12. Programme d'ordinateur téléchargeable depuis un réseau de communications et/ou stocké sur un support lisible par ordinateur et/ou exécutable par un microprocesseur, **caractérisé en ce qu'**il comprend des instructions pour l'exécution des étapes d'un procédé de communication selon l'une quelconque des revendications 1 à 5, lorsqu'il est exécuté sur un ordinateur.

## Patentansprüche

1. Verfahren zur Kommunikation zwischen einer ersten Client-Vorrichtung und einer zweiten Client-Vorrichtung, das die folgenden Schritte umfasst:
a) die erste Client-Vorrichtung oder eine erste Relais-Vorrichtung, die an die erste Client-Vorrichtung angeschlossen ist, sendet an die zweite Client-Vorrichtung oder an eine zweite Relais-Vorrichtung, die an die zweite Client-Vorrichtung angeschlossen ist, eine Nachricht zur Initialisierung einer TCP-Verbindung, "Transmission Control Protocol"-Verbindung, gemäß einem Weg, so genanntem ersten Weg, wobei die Initialisierungsnachricht eine TCP-Option umfasst,
b) die erste Client-Vorrichtung oder erste Relais-Vorrichtung und die zweite Client-Vorrichtung oder zweite Relais-Vorrichtung nehmen an einer TCP-Verbindung und an einer Mehrwegverbindung zwischen ihnen gemäß dem ersten Weg teil, und
c) wenn mindestens eine der zwei Client-Vorrichtungen oder eine der zwei Relais-Vorrichtungen eine Anomalie bezüglich der Mehrwegverbindung feststellt, verwenden die erste Client-Vorrichtung und die zweite Client-Vorrichtung die TCP-Verbindung für das Austauschen von Nutzdaten,
**dadurch gekennzeichnet, dass** die TCP-Option anzeigt, dass die erste Client-Vorrichtung oder erste Relais-Vorrichtung wünscht, mit der zweiten Client-Vorrichtung oder zweiten Relais-Vorrichtung gleichzeitig an einer TCP-Verbindung und an einer Mehrwegverbindung gemäß dem ersten Weg teilzunehmen, und dass die TCP-Option anzeigt, dass eine Mehrwegverbindung gemäß dem ersten Weg als Antwort von der zweiten Client-Vorrichtung oder der zweiten Relais-Vorrichtung akzeptiert oder initialisiert werden muss, wenn die zweite Client-Vorrichtung oder die zweite Relais-Vorrichtung mit einer Mehrwegverbindung kompatibel ist.

2. Kommunikationsverfahren nach Anspruch 1, **dadurch gekennzeichnet, dass** in Schritt b) die zweite Client-Vorrichtung oder zweite Relais-Vorrichtung die Mehrwegverbindung nach dem Empfang der Nachricht zur Initialisierung einer TCP-Verbindung initialisiert, die von der ersten Client-Vorrichtung oder ersten Relais-Vorrichtung in Schritt a) gesendet wurde.

3. Kommunikationsverfahren nach Anspruch 1 oder Anspruch 2, **dadurch gekennzeichnet, dass** wenn keine Anomalie bezüglich der Mehrwegverbindung festgestellt wird und wenn zwischen der ersten und der zweiten Client-Vorrichtung mindestens ein anderer Weg neben dem ersten Weg besteht, Folgendes durchgeführt wird:
- Prüfen der Kompatibilität des anderen Wegs mit den TCP-Optionen, die für die Mehrwegverbindung charakteristisch sind, und,
- wenn die Prüfung positiv ausfällt, Austauschen zwischen der ersten und der zweiten Client-Vorrichtung von Nutzdaten im Rahmen der Mehrwegverbindung über diesen anderen Weg zusätzlich zum ersten Weg.

4. Kommunikationsverfahren nach Anspruch 3, **dadurch gekennzeichnet, dass** zum Durchführen der Überprüfung der Kompatibilität des anderen Wegs die erste Client-Vorrichtung oder erste Relais-Vorrichtung oder die zweite Client-Vorrichtung oder zweite Relais-Vorrichtung eine Nachricht zur Initialisierung einer Untersitzung gemäß dem anderen Weg im Rahmen der Mehrwegkommunikation ausgibt, wobei die Nachricht zur Initialisierung einer Untersitzung eine TCP-Option umfasst, die darauf hinweist, dass die Untersitzung nicht vor einem positiven Ergebnis der Prüfung für das Austauschen von Nutzdaten verwendet werden darf.

5. Kommunikationsverfahren nach einem der Ansprüche 1 bis 4, **dadurch gekennzeichnet, dass** die Mehrwegverbindung das MPTCP-Protokoll, "Multi-Path TCP"-Protokoll, umsetzt.

6. Kommunikationsvorrichtung, so genannte erste Kommunikationsvorrichtung, die Mittel zum Teilnehmen an einer TCP-Verbindung, "Transmission Control Protocol"-Verbindung, besitzt, sowie Mittel zum:
- Senden an eine andere Kommunikationsvorrichtung, so genannte zweite Kommunikationsvorrichtung, einer Nachricht zur Initialisierung einer TCP-Verbindung gemäß einem Weg, so genanntem ersten Weg, wobei die Initialisierungsnachricht eine TCP-Option umfasst,
- ebenso Initialisieren einer Mehrwegverbindung mit der zweiten Kommunikationsvorrichtung gemäß dem ersten Weg, und
- wenn eine Anomalie bezüglich der Mehrwegverbindung festgestellt wird, Verwenden der TCP-Verbindung für das Austauschen von Nutzdaten mit der zweiten Kommunikationsvorrichtung,
**dadurch gekennzeichnet, dass** die TCP Option anzeigt, dass die erste Kommunikationsvorrichtung wünscht, mit der zweiten Kommunikationsvorrichtung gleichzeitig an einer TCP-Verbindung und an einer Mehrwegverbindung gemäß dem ersten Weg teilzunehmen, und die TCP Option anzeigt, dass eine Mehrwegverbindung gemäß dem ersten Weg als Antwort von der zweiten Kommunikationsvorrichtung oder von der zweiten Relais-Vorrichtung akzeptiert oder initialisiert werden muss, wenn die zweite Kommunikationsvorrichtung oder zweite Relais-Vorrichtung mit einer Mehrwegverbindung kompatibel ist.

7. Kommunikationsvorrichtung, so genannte zweite Kommunikationsvorrichtung, die Mittel zum Teilnehmen an einer TCP-Verbindung, "Transmission Control Protocol"-Verbindung, besitzt, sowie Mittel zum:
- Empfangen von einer anderen Kommunikationsvorrichtung, so genannten ersten Kommunikationsvorrichtung, einer Nachricht zur Initialisierung einer TCP-Verbindung gemäß einem Weg, so genanntem ersten Weg, wobei die Initialisierungsnachricht eine TCP-Option umfasst,
- Akzeptieren oder Initialisieren einer Mehrwegverbindung mit der ersten Kommunikationsvorrichtung gemäß dem ersten Weg, und
- wenn eine Anomalie bezüglich der Mehrwegverbindung festgestellt wird, Verwenden der TCP-Verbindung für das Austauschen von Nutzdaten mit der ersten Kommunikationsvorrichtung,
**dadurch gekennzeichnet, dass** die TCP-Option anzeigt, dass die erste Kommunikationsvorrichtung wünscht, mit der zweiten Kommunikationsvorrichtung gleichzeitig an einer TCP-Verbindung und an einer Mehrwegverbindung gemäß dem ersten Weg teilzunehmen, und dass die TCP-Option anzeigt, dass eine Mehrwegverbindung gemäß dem ersten Weg als Antwort von der zweiten Kommunikationsvorrichtung oder von der zweiten Relais-Vorrichtung akzeptiert oder initialisiert werden muss, wenn die zweite Kommunikationsvorrichtung oder zweite Relais-Vorrichtung mit einer Mehrwegverbindung kompatibel ist.

8. Kommunikationsvorrichtung nach Anspruch 6 oder Anspruch 7, **dadurch gekennzeichnet, dass** sie unter anderem Mittel umfasst zum Ausgeben, wenn mindestens ein anderer Weg neben dem ersten Weg besteht, der sie mit der anderen Kommunikationsvorrichtung verbindet, einer Nachricht zur Initialisierung einer Untersitzung gemäß dem anderen Weg im Rahmen der Mehrwegkommunikation, wobei die Nachricht zur Initialisierung einer Untersitzung eine TCP-Option umfasst, die darauf hinweist, dass die Untersitzung nicht vor einem positiven Ergebnis einer Prüfung der Kompatibilität dieses anderen Wegs mit den TCP-Optionen, die für die Mehrwegverbindung charakteristisch sind, für das Austauschen von Nutzdaten verwendet werden darf.

9. Kommunikationsvorrichtung nach einem der Ansprüche 6 bis 8, **dadurch gekennzeichnet, dass** sie eine Client-Vorrichtung umfasst.

10. Kommunikationsvorrichtung nach einem der Ansprüche 6 bis 8, **dadurch gekennzeichnet, dass** sie eine Relais-Vorrichtung umfasst.

11. Mittel zum Speichern von unveränderbaren oder teilweise oder vollständig veränderbaren Daten, die Computerprogrammcode-Anweisungen umfassen, die, wenn sie von einem Computer ausgeführt werden, diesen dazu bringen, die Schritte eines Kommunikationsverfahrens nach einem der Ansprüche 1 bis 5 umzusetzen.

12. Computerprogramm, das aus einem Kommunikationsnetzwerk herunterladbar ist und/oder auf einem computerlesbaren Medium gespeichert ist und/oder von einem Mikroprozessor ausführbar ist, **dadurch gekennzeichnet, dass** es Anweisungen zur Ausführung der Schritte eines Kommunikationsverfahrens nach einem der Ansprüche 1 bis 5 umfasst, wenn es auf einem Computer ausgeführt wird.

## Claims

1. Method of communicating between a first client device and a second client device, comprising the following steps:
a) said first client device or a first relay device connected to the first client device sends to said second client device or to a second relay device connected to the second client device a message for initializing a TCP, or Transmission Control Protocol, connection along a path, referred to as first path, said initialization message comprising a TCP option,
b) said first client device or first relay device and said second client device or second relay device participate in a TCP connection and in a multi-path connection therebetween along the first path, and
c) if at least one of the two client devices or one of the two relay devices observes an anomaly regarding said multi-path connection, the first client device and the second client device use said TCP connection for exchanging payload data, **characterized in that** said TCP option indicates that the first client device or first relay device wishes to participate with the second client device or second relay device both in a TCP connection and in a multi-path connection along said first path, and that said TCP option indicates that a multi-path connection along the first path must, in response, be accepted or initialized by the second client device or the second relay device, if the second client device or the second relay device is compatible with a multi-path connection.

2. Method of communication according to Claim 1, **characterized in that**, during said step b), said second client device or second relay device initializes said multi-path connection following the receipt of said message for initializing a TCP connection sent by said first client device or first relay device during said step a) .

3. Method of communication according to either of Claims 1 and 2, **characterized in that**, if no anomaly regarding said multi-path connection is observed, and if there exists between said first and second client devices at least one path other than said first path:
- the compatibility of said other path with the TCP options specific to the multi-path connection is verified, and
- if said verification is positive, the first and the second client devices exchange payload data therebetween, within the multi-path connection, via this other path in addition to the first path.

4. Method of communication according to Claim 3, **characterized in that**, in order to carry out said verification of the compatibility of said other path, the first client device or first relay device, or the second client device or second relay device, generates a message for initializing a sub-session along said other path within said multi-path communication, said message for initializing a sub-session comprising a TCP option, indicating that said sub-session must not be used for exchanging payload data before a positive conclusion of said verification.

5. Method of communication according to any one of Claims 1 to 4, **characterized in that** said multi-path connection implements the MPTCP, or Multi-Path TCP, protocol.

6. Communicating device, referred to as first communicating device, having means for participating in a TCP, or Transmission Control Protocol, communication together with means for:
- sending to another communicating device, referred to as second communicating device, a message for initializing a TCP connection along a path, referred to as first path, said initialization message comprising a TCP option,
- also initializing a multi-path connection with the second communicating device along the first path, and
- if it observes an anomaly regarding said multi-path connection, using said TCP connection for exchanging payload data with the second communicating device, **characterized in that** said TCP option indicates that the first communicating device wishes to participate with the second communicating device both in a TCP connection and in a multi-path connection along said first path, and said TCP option indicates that a multi-path connection along the first path must, in response, be accepted or initialized by the second communicating device or the second relay device, if the second communicating device or the second relay device is compatible with a multi-path connection.

7. Communicating device, referred to as second communicating device, having means for participating in a TCP, or Transmission Control Protocol, communication together with means for:
- receiving from another communicating device, referred to as first communicating device, a message for initializing a TCP connection along a path, referred to as first path, said initialization message comprising a TCP option,
- accepting or initializing a multi-path connection with the first communicating device along the first path, and
- if it observes an anomaly regarding said multi-path connection, using said TCP connection for exchanging payload data with the first device, **characterized in that** said TCP option indicates that the first communicating device wishes to participate with the second communicating device both in a TCP connection and in a multi-path connection along said first path, and that said TCP option indicates that a multi-path connection along the first path must, in response, be accepted or initialized by the second communicating device or second relay device, if the second communicating device or second relay device is compatible with a multi-path connection.

8. Communicating device according to either of Claims 6 and 7, **characterized in that** it furthermore comprises means for, when there exists at least one path other than said first path connecting it to said other communicating device, generating a message for initializing a sub-session along said other path within said multi-path communication, said message for initializing a sub-session comprising a TCP option, indicating that said sub-session must not be used for exchanging payload data before a positive conclusion of a verification of the compatibility of this other path with the TCP options specific to the multi-path connection.

9. Communicating device according to any one of Claims 6 to 8, **characterized in that** it comprises a client device.

10. Communicating device according to any one of Claims 6 to 8, **characterized in that** it comprises a relay device.

11. Fixed, or partially or totally removable data storage means, comprising computer programme code instructions which, when they are executed by a computer, lead the latter to implement the steps of a method of communication according to any one of Claims 1 to 5.

12. Computer programme downloadable from a communications network and/or stored on a medium readable by computer and/or executable by a microprocessor, **characterized in that** it comprises instructions for the execution of the steps of a method of communication according to any one of Claims 1 to 5, when it is executed on a computer.
